**Europäisches Patentamt**

**European Patent Office**

**Office européen des brevets**

(19)

(11) Veröffentlichungsnummer: **0 136 448 B1**

(12) # EUROPÄISCHE PATENTSCHRIFT

(45) Veröffentlichungstag der Patentschrift:
18.10.89

(51) Int. Cl.⁴: **C 01 G 43/00**

(21) Anmeldenummer: **84108786.9**

(22) Anmeldetag: **25.07.84**

(54) Verfahren zur Herstellung von salpetersäurelöslichen Uran-Thorium- und Uran-Plutonium-Mischoxiden.

(30) Priorität: **17.09.83 DE 3333652**

(43) Veröffentlichungstag der Anmeldung:
**10.04.85 Patentblatt 85/15**

(45) Bekanntmachung des Hinweises auf die Patenterteilung:
**18.10.89 Patentblatt 89/42**

(84) Benannte Vertragsstaaten:
**BE DE FR GB IT**

(56) Entgegenhaltungen:
**WO-A-83/03820**
**FR-A- 1 303 477**
**FR-A- 1 437 845**
**US-A- 2 981 592**

(73) Patentinhaber: **Nukem GmbH, Rodenbacher Chaussee 6 Postfach 11 00 80, D-6450 Hanau 11 (DE)**

(72) Erfinder: **Vietzke, Horst, Dr. Dipl.-Chem., Burgstrasse 19, D-6457 Maintal 4 (DE)**
Erfinder: **Hrovat, Milan, Dr. Dipl.-Ing., Meisenweg 7, D-6458 Rodenbach 2 (DE)**
Erfinder: **Huschka, Hans, Dr. Dipl.-Chem., Grünaustrasse 5, D-6450 Hanau 9 (DE)**

## Beschreibung

Die Erfindung betrifft ein Verfahren zur Herstellung von salpetersäurelöslichen, homogenen, rieselfähigen Uran-Thorium und Uran-Plutonium-Mischoxidpulvern aus entsprechenden Nitratsalzlösungen dieser Schwermetalle.

Für die nächste Generation von Kernreaktoren soll neben Thorium vor allem Plutonium in Form von Mischoxiden mit Uran benutzt werden. Es lag nahe, die entsprechenden Oxide von Uran, Thorium und Plutonium getrennt nach bekannten Verfahren herzustellen, sie dann zu mischen und zu sintern. Es zeigte sich aber, daß aus Oxidgemischen hergestellte Brennstofftabletten, besonders plutoniumhaltige Sintertabletten, nicht oder nur sehr gering in Salpetersäure gelöst werden können. Für die Wiederaufarbeitung des abgebrannten Kernbrennstoffes ist die Löslichkeit in Salpetersäure aber ein wichtiges Kriterium, weil die ansonsten notwendige Anwendung von Salpetersäure/-Flußsäure-Gemischen zu Korrosionsproblemen in den Auflösebehältern führen würden.

Es ist bekannt, daß Kernbrennstofftabletten aus den Mischoxiden $UO_2$ $PuO_2$ bzw. $UO_2$ $ThO_2$ in Salpetersäure gut löslich sind, wenn in den Tabletten homogene Mischoxidkristalle $(U, Pu)O_2$ bzw. $(U, Th)O_2$ vorliegen. Solche homogenen Mischoxide kann man beispielsweise entsprechend der DE-A 2 833 054 durch eine intensive, gemeinsame Zerkleinerung beider Oxide unter optimalen Mischbedingungen und anschließendem Sintern, bzw. einer nochmaligen Zerkleinerung und abermaligem Pressen und Sintern herstellen. Mit diesem Verfahren können zwar salpetersäurelösliche Kernbrennstofftabletten erzeugt werden, jedoch ist unter den sicherheitstechnischen Bedingungen der Aufwand sehr hoch (ca. 10 Arbeitsschritte) und eine Erhöhung des Durchsatzes nur durch das Nebeneinanderstellen vieler Linien zu erreichen, weil das Misch- und Mahlvolumen eine bestimmte Größe wegen Agglomeratbildung nicht überschreiten darf. Außerdem wird bei den Mahlprozessen viel Staub erzeugt, der den Prozeß erschwert und die Verluste erhöht. Die so erhaltenen Mischoxide sind außerdem nicht rieselfähig und müssen nachträglich konditioniert werden, um sie kontinuierlich verpressen zu können.

Weiterhin sind eine Reihe von Verfahren bekannt, bei denen die Komponenten der Mischoxide (Uran, Thorium, Plutonium) gemeinsam ausgefällt und in die Mischoxide überführt werden. Bei dem sogenannten ADU-Verfahren, bei dem Ammoniumdiuranat und $Pu(OH)_4$ nebeneinander ausgefällt werden, entsteht eine sehr homogene Mischung, die beim späteren Sintern in Mischkristallpulver übergeht. Das Pulver ist jedoch nicht rieselfähig und kann daher nur schwer weiterverarbeitet werden. Bei der Ammoniumuranylkarbonatfällung entsehen Mischkristalle des Komplexsalzes $(NH_4)_4 ((U, Pu)O_2(CO_3)_3)$, das durch Reduktion in Mischoxidpulver überführt werden kann. Auch bei der Peroxidfällung entsteht ein Mischperoxiod $(U, Pu)O_4$, bei dem Uran 6-wertig, Plutonium aber nur 4-wertig ist. Dieses Peroxid geht bei der Reduktion in Mischoxid $(U, Pu)O_2$ über. Das reduzierte Pulver ist rieselfähig.

Diese Co-Fällungsverfahren besitzen aber wirtschaftliche Nachteile durch die Kritikalitätsbegrenzung (sichere Geometrie), die Nachfällung und Beseitigung der Filtrate z.B. durch Eindampfen. Die Kritikalitätsbegrenzung erfordert die Verarbeitung großer Flüssigkeitsvolumina in kleinen Gefässen, was sehr aufwendig ist.

Aus der FR-A-1 303 477 ist ein Verfahren zur Herstellung von reaktiven Uranoxidkörnern definierter Größe bekannt, indem man eine konzentrierte Urannitratlösung mit Uranoxidteilchen bei Temperaturen oberhalb 180 °C zusammenbringt und die entstehenden Körner bei höheren Temperaturen zu Uranoxid zersetzt. Für die Herstellung von homogenen und rieselfähigen Mischoxidpulvern ist dieses Verfahren jedoch nicht geeignet, da die Uranoxidkörner einen Schichtaufbau zeigen.

Es war daher Aufgabe der vorliegenden Erfindung, ein Verfahren zur Herstellung von salpetersäurelöslichen, homogenen, rieselfähigen Uran-Thorium- und Uran-Plutonium-Mischoxidpulvern aus entsprechenden Nitratsalzlösungen dieser Schwermetalle zu finden, das hohe Durchsätze erlaubt, möglichst wenige Arbeitsschritte erfordert, für die Handschuhbox-Technik geeignet ist, möglichst keine Filtrate liefert und kostengünstig arbeitet.

Diese Aufgabe wurde erfindungsgemäß dadurch gelöst, daß die Lösung bis zu einer Konzentration von 1000 bis 1250 g Schwermetall/l eingedampft, dann auf Keramikkugeln eines Rührbettreaktors bei einer Temperatur von 200 bis 600 °C aufgesprüht und das entstehende Pulver anschließend bei 500 bis 1500 °C mit Wasserstoff oder Wasserstoff/Wasserdampf zu $(U, Th)O_2$ – bzw. $(U, Pu)O_2$ reduziert wird.

Das Verfahren kann dabei durch Variation der Verfahrensparameter so geführt werden, daß entweder sintertechnisch inaktive oder sinterfähige Mischoxidpulver entstehen.

Bei der gemeinsamen Denitrierung der salpetersauren, hochkonzentrierten Lösung im Rührbettreaktor bilden sich bereits Agglomerate aus $UO_3 + ThO_2$ bzw. $UO_3 + PuO_2$, die beim Reduzieren der Pulver in die Mischoxide $(U, Th)O_2$ bzw. $(U, Pu)O_2$ übergehen. Sowohl das Mischoxidpulver wie auch die daraus gepreßten und gesinterten Pellets sind vollständig in Salpetersäure löslich.

Bei der Denitrierung im Rührbettreaktor kann man sowohl sintertechnisch inaktives, dichtes, wie auch gut preß- und sinterfähiges Mischoxidpulver in rieselfähiger Form erzeugen. So ist z.B. zur Herstellung von Tabletten durch das sogenannte Heißschlagverdichten ein homogenes Mischoxidpulver von geringer Sinterfähigkeit, möglichst hoher Dichte und guter Rieselfähigkeit wünschenswert. Zur Herstellung dieser inaktiven Mischoxidpulver werden die Nitratlösungen, beispielsweise im Verhältnis 60% U : 40% Th, gemischt und durch eine Eindampfanlage in sicherer Geometrie auf etwa 1000–1250 g Schwermetalle/l eingeengt. Diese nur in der Hitze flüssige Masse wird dann auf die Kugeln eines Rührbettreaktors gesprüht, wobei Luft zum Austreiben des $NO_x$ verwendet werden kann. Bei 300–600 °C erfolgt eine sofortige Co-Denitrierung zu $UO_3/PuO_2$. Es entstehen Kristalle von 3–4 μm Größe, die entweder aus $UO_3$ oder $UO_3ThO_2$-Teilchen bestehen. Vereinzelt liegen auch schon echte Mischkristalle vor. Dieses Pulver wird mit Wasserstoff bei 1500 °C reduziert. Dabei wachsen die Kristalle auf 15–20 μm und das Pulver zeigt eine hervorragende Rieselfähigkeit bei einer Schüttdichte von 4,65 g/cm³ und einer BET-Oberfläche von 0,12 m²/g. Benötigt man dagegen ein Mischoxidpulver mit guter Sinterfähigkeit, um die Tabletten auch durch Pressen und Sintern auf herkömmliche Weise herstellen zu können, muß man die Denitrierung bei 200 bis 300 °C in einem Wasserdampfstrom vornehmen. Ein geeigneter Denitrator ist auch in diesem Falle der Rührbettreaktor, in den Wasserdampf bei ca. 200–300 °C eingeleitet wird.

Die beispielsweise auf 1000 g Schwermetall/l eingedampfte Nitratlösung (z. B. U-Th-Nitrat) wird direkt auf die heißen Keramikkugeln gespritzt, wobei sich unter Co-Denitrierung Mischoxidpartikel bilden. Solche Pulver haben eine BET-Oberfläche von etwa 3–5 m²/g und sind nach vorsichtiger Reduktion bei etwa 520 °C sinterfähig. Bei dieser Temperatur und reduktiven Bedingungen wird schon ein erheblicher Anteil an Mischoxidpulvern in echte Mischkristalle überführt. Bereits unter 1000 °C bilden diese reaktionsfähigen Pulver quantitativ Mischoxidkristalle.

Gegenüber den bekannten Verfahren besitzt das erfindungsgemäße Verfahren eine Reihe von Vorteilen.

1. Es ist sehr kostengünstig, da keine Chemikalien eingesetzt werden müssen wie bei den Fällungsverfahren. Es hat nur wenige Arbeitsschritte (Mischen, Eindampfen, Denitrieren, Reduzieren), im Gegensatz zu den bekannten Verfahren, die bis zu 10 Arbeitsschritte erfordern.

2. Die Mischoxidpulver sind sehr homogen und außerdem rieselfähig.

3. Die Salpetersäurelöslichkeit ist sehr gut. Die Wiederaufarbeitung sowohl unbestrahlter Brennstoffschrotte als vorallem auch des bestrahlten Mischoxidbrennstoffes ist problemlos.

4. Es entstehen keine Filtrate, die beseitigt werden müssen.

5. Es können sowohl sinterfähige wie auch porenarme, sintertechnisch inaktive Mischoxidpulver hergestellt werden.

6. Der notwendige Rührbettreaktor ist relativ klein und leicht in der Boxentechnik zu verwenden. Durch die hohe Schwermetallkonzentration (1250 g SM/l) ist der Durchsatz in der gleichen Geometrie wie bei den Fällverfahren (normalerweise 200 g SM/l) sechs mal so hoch.

Folgende Beispiele sollen das erfindungsgemäße Verfahren näher erläutern:

Beispiel 1

Ein inaktives Mischoxidpulver zum Heißschlagverdichten mit 60% Urananteil und 40% Thoriumanteil wird folgendermaßen erzeugt:

Die Ausgangslösung mit einer Konzentration von ca. 400 g SM/l wird homogenisiert und dann in einen Durchlaufverdampfer gegeben. Bei 120–125 °C Badtemperatur stellt sich eine Endkonzentration von 1000 g SM/l ein. Die Lösung muß mit dieser Temperatur in den Denitrator eingesprüht werden, weil sie unter 113 °C erstarrt. Als Denitrator ist beispielsweise ein Rührbettreaktor mit Aluminiumoxidkugeln geeignet, wie er in der DE-A 3 205 569 beschrieben wird. Das Rührbett wird elektrisch beheizt auf 500 °C gehalten und die Nitratlösung direkt von oben auf die langsam bewegten Kugeln gesprüht. Es tritt sofort Co-Denitrierung unter Abgabe von $NO_x$ ein. Das entstehende Oxidpulver wird durch die bewegten Kugeln granuliert und rieselt langsam nach unten durch einen Rost in eine Ablaßvorrichtung. Das Abgas verläßt den Reaktor gereinigt über Heißgasfilterkerzen. Das Oxidpulver enthält noch ca. 1% Nitrat und hat eine Rütteldichte von 3 g/cm³. Es wird anschließend in einen Durchstoßofen in Wasserstoffatmosphäre bei 1500 °C reduziert, wobei das restliche Nitrat entweicht, die Schüttdichte auf 3,4 g/cm³ und die Rütteldichte auf 4,65 g/cm³ steigen. Die nach der Denitrierung vorhandene BET-Oberfläche von ca. 2 m²/g sinkt dabei auf 0,12 m²/g. Ein solches rieselfähiges Pulver ist hervorragend für das Heißschlagverdichten geeignet und in Salpetersäure vollständig löslich.

Beispiel 2

Die wie in Beispiel 1 gemischte und eingedampfte Nitratlösung wird auf die Keramikkugeln des Rührbettes aufgesprüht, gleichzeitig wird von oben Dampf von 300 °C zugespeist. Die Denitrierung erfolgt bei 300 °C. Das entstehende Mischoxidpulver enthält noch 1,2% Nitrat, hat aber eine BET-Oberfläche von 3–5 m²/g und eine Schütteldichte von 1,95 g/m³. Die Reduktion wird anschließend in einem Wirbelbett vorgenommen, in dem ebenfalls Wasserdampf als Trägergas und Wasserstoff als Reduktionsmittel benutzt werden. Bei 520 °C wird vorgelegtes Mischoxidpulver gewirbelt und das denitrierte Mischoxid von oben portionsweise auf das wirbelnde Pulver aufgegeben. Bei dieser schonenden Reduktion, bei der die $U_3U_8$-Phase vermieden wird, entsteht ein gut sinterfähiges Mischoxidpulver mit 3–5 m²/g an BET-Oberfläche. Auch dieses Pulver ist in $HNO_3$ vollständig löslich.

**Patentansprüche**

1. Verfahren zur Herstellung von salpetersäurelöslichen, homogenen, rieselfähigen Uran-Thorium- und Uran-Plutonium-Mischoxidpulvern aus entsprechenden Nitratsalzlösungen dieser Schwermetalle, dadurch gekennzeichnet, daß die Lösung bis zu einer Konzentration von 1000 bis 1250 g Schwermetall/l eingedampft, dann auf Keramikkugeln eines Rührbettreaktors bei einer Temperatur von 200 bis 600 °C aufgesprüht und das entstehende Pulver anschließend bei 500 bis 1500 °C mit Wasserstoff oder Wasserstoff/Wasserdampf zu $(U, Th)O_2$ bzw. $(U, Pu)O_2$ reduziert wird.

2. Anwendung des Verfahrens nach Anspruch 1 zur Herstellung von sintertechnisch inaktiven Mischoxidpulvern, dadurch gekennzeichnet, daß die aufkonzentrierte Lösung bei 300 bis 600 °C auf die Keramikkugeln des Rührbettreaktors aufgesprüht wird.

3. Anwendung des Verfahrens nach Anspruch 1 zur Herstellung von preß- und sinterfähigen Mischoxidpulvern, dadurch gekennzeichnet, daß die aufkonzentrierte Lösung bei 200 bis 300 °C in Gegenwart von Wasserdampf auf die Keramikkugeln des Rührbettreaktors aufgesprüht wird und die Reduktion bei 500 bis 1000 °C erfolgt.

**Claims**

1. A process for the production of homogeneous, freeflowing uranium/thorium and uranium/plutonium mixed oxide powders soluble in nitric acid from corresponding nitrate salt solutions of these heavy metals, characterized in that the solution is concentrated by evaporation to a concentration of 1000 to 1250 g heavy metal/l and subsequently sprayed onto ceramic beads of a stirred-bed reactor at a temperature in the range from 200 to 600 °C and the powder formed is subsequently reduced to (U, Th)$O_2$ or (U, Pu)$O_2$ with hydrogen or hydrogen/steam at 500 to 1500 °C.

2. The use of the process claimed in claim 1 for the production of mixed oxide powders inactive to sintering, characterized in that the concentrated solution is sprayed onto the ceramic beads of the stirred-bed reactor at 300 to 600 °C.

3. The use of the process claimed in claim 1 for the production of press-moldable and sinterable mixed oxide powders, characterized in that the concentrated solution is sprayed onto the ceramic beads of the stirred-bed reactor in the presence of steam at 200 to 300 °C and in that reduction takes place at 500 to 1000 °C.

**Revendications**

1. Procédé pour la préparation de poudres d'oxydes mixtes d'uranium-thorium et d'uranium-plutonium homogènes, fluides, solubles dans l'acide nitrique, à partir de solutions de nitrates correspondantes de ces métaux lourds, caractérisé en ce que l'on évapore la solution jusqu'à une concentration de 1000 à 1250 g de métal lourd par litre, puis on la pulvérise, à une température de 200 à 600 °C sur des billes céramiques d'un réacteur à lit agité et on réduit ensuite en (U, Th)$O_2$ ou (U, Pu)$O_2$ la poudre résultante, à 500–1500 °C, avec de l'hydrogène ou un mélange d'hydrogène et de vapeur d'eau.

2. Utilisation du procédé selon la revendication 1 pour la préparation de poudres inactives au frittage, caractérisée en ce que la solution concentrée est pulvérisée, à 200–300 °C, sur les billes céramiques du réacteur à lit agité.

3. Utilisation du procédé selon la revendication 1 pour la préparation de poudres aptes à la compression et au frittage, caractérisée en ce que la solution concentrée est pulvérisée, à 200–300 °C, en présence de vapeur d'eau, sur les billes céramiques du réacteur à lit agité, et la réduction est effectuée à 500–1000 °C.